Europäisches Patentamt

(19) European Patent Office

Office européen des brevets

(11) Publication number: **0 219 456**
**B1**

(12) **EUROPEAN PATENT SPECIFICATION**

(45) Date of publication of patent specification: **17.11.88**

(21) Application number: **86810413.4**

(22) Date of filing: **15.09.86**

(51) Int. Cl.⁴: **E 04 G 23/02**

(54) **Wall tie.**

(30) Priority: **18.09.85 GB 8523045**
**30.12.85 GB 8531875**

(43) Date of publication of application:
**22.04.87 Bulletin 87/17**

(45) Publication of the grant of the patent:
**17.11.88 Bulletin 88/46**

(84) Designated Contracting States:
**DE GB NL**

(56) References cited:
**FR-A-2 301 723**
**GB-A-2 143 571**
**GB-A-2 144 169**
**GB-A-2 152 993**

(73) Proprietor: **HILTI Aktiengesellschaft**
**FL-9494 Schaan (LI)**

(72) Inventor: **Wilshaw, Graham**
**74 Victoria Street Denton**
**Manchester M34 3QZ (GB)**

(74) Representative: **Wildi, Roland**
**Hilti Aktiengesellschaft Patentabteilung**
**FL-9494 Schaan (LI)**

## Description

This invention concerns wall ties of the kind comprising a rod having first anchoring means which may be of any suitable form at or adjacent to one end thereof, for anchoring in one skin of a cavity wall, and second anchoring means, of a mechanically-expansible nature, adjacent its other end for anchoring in the other skin of the wall, the arrangement being such that expansion of the second anchoring means if effected by rotation of a nut threaded on the rod, the nut being provided with lugs or projections engageable by a tool of rotation of said nut.

Wall ties of this kind are know from GB—A—2143571.

Wall ties of this sort are used, for example, as replacements for deteriorated or disintegrated wall ties in existing cavity walls, in order to ensure that the two skins of the wall remain tied to one another. Remedial work of this kind is becoming more and more necessary, especially in relation to building structures erected, for instance, thirty or forty years ago, when use was made extensively of galvanized wire butterfly-type wall ties in the original structure of the building, these wall ties having been prone to rusting away and disintegration and thereafter resulting in bulging and/or cracking of the walls.

One of the problems in the installation of the replacement wall ties of the kind with which the invention is concerned lies in ensuring that the mechanically-expansible second anchoring means is adequately expanded, and also that it is not over-expanded. Excessive expansion of the anchoring means can result in bursting or disintegration of the brick or other structural material of which the respective wall skin is constructed, with the result that the tie is not effectively anchored therein and does not perform its intended function.

An object of the present invention is to provide a form of wall tie, of the kind above referred to, in which provision is made, in a very simple way, for ensuring that the said second anchoring means is expanded effectively to the desired extent but cannot be over-expanded.

With this object in view, the present invention provides a wall tie of the kind comprising a rod having first anchoring means (which may be of any suitable form) at or adjacent to one end thereof, for anchoring in one skin of a cavity wall, and second anchoring means, of a mechanically-expansible nature, adjacent to its other end for anchoring in the other skin of the wall, the arrangement being such that expansion of the second anchoring means is effected by rotation of a nut threaded on the rod, the nut being provided with lugs or projections engageable by a tool for rotation of said nut, characterised in that the lugs or projections are adapted to break off upon reaching a predetermined torque, thereby obviating the possibility of over-expansion of the second anchoring means.

Conveniently the nut is a circular nut having a pair of diametrically-opposed lugs or projections.

The invention will be described further, by way of example, with reference to the accompanying drawings, in which:—

Fig. 1 is a cross-sectional side elevation illustrating a first practical embodiment of the wall tie of the invention in position in a borehole in a cavity wall, and with the first anchoring means thereof expanded;

Fig. 2 is a view comparable with Fig. 1, but showing the wall tie with its second anchoring means expanded, so that the tie is fully anchored in the wall;

Fig. 3 is a view comparable with Fig. 2 but showing a second embodiment of the wall tie of the invention;

Fig. 4 is a view similar to Fig. 1, but showing a third embodiment of the wall tie of the invention with its first expansion means expanded; and

Fig. 5 is a view comparable with Fig. 4, showing the wall tie with its second expansible means expanded.

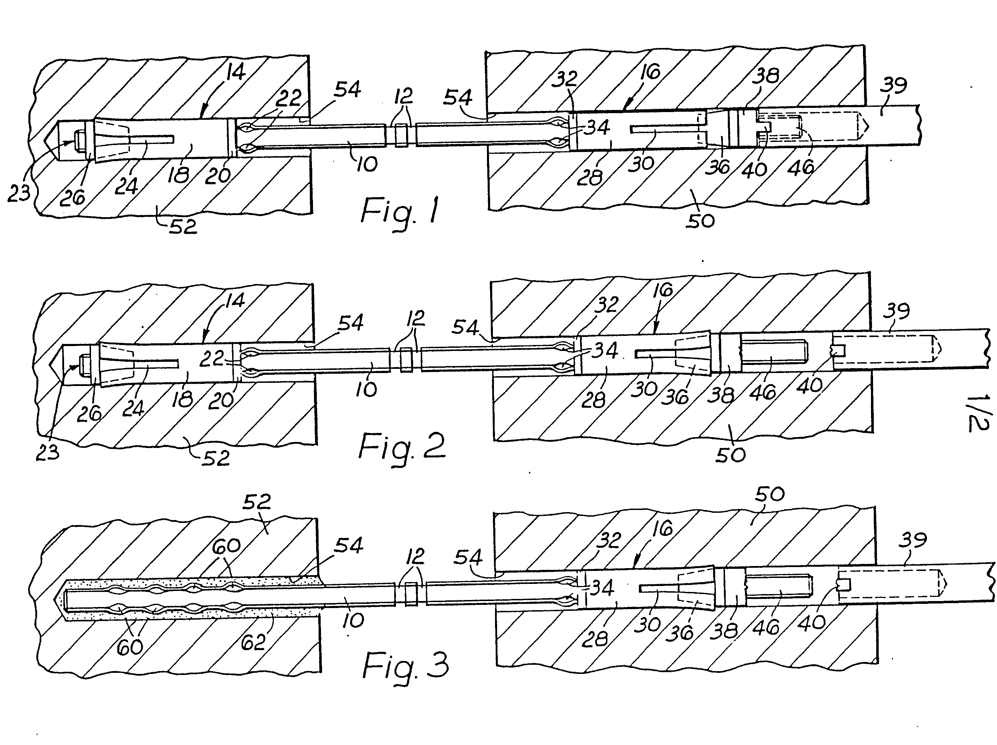

The first embodiment of the wall tie of the invention, illustrated in Figs. 1 and 2, comprises an elongate externally-threaded stainless steel rod 10 which approximately midway along its length has drip grooves 12. At or adjacent one end of the rod 10 is first anchoring means, as indicated generally by the reference numeral 14, and adjacent the other end of the rod 10 is second anchoring means indicated generally by the reference numeral 16.

The first anchoring means 14 may be of any suitable form; in the illustrated case such anchoring means is of a mechanically-expansible type and comprises a tubular metal sleeve 18 the inner end of which abuts against a washer 20 which in turn abuts against stops 22 formed integrally with the rod 10 simply by cold pinching localised areas of the rod 10 at appropriate dispositions away from extremity 23 of the rod 10. Slots 24 are formed in the sleeve 18 and extend axially thereof from the end remote from the washer 20 and over about half of the length of the sleeve 18. A mechanical expansion element, in the form of a frusto-conical nut 26, is screwed onto the rod 10 so as to project by its narrow end into the sleeve 18. It will thus be appreciated that upon rotation of the rod 10, whilst the sleeve 18 and nut 26 are retained against rotation, the nut 26 will be drawn into the sleeve 18 to expand the latter.

The second anchoring means 16 is also (and essentially) of a mechanically-expansible nature. Said means is somewhat similar to the first anchoring means 14, but is reversed in its arrangement, comprising a sleeve 28, with slots 30, abutting by its non-slotted end against a washer 32 which in turn abuts against stops 34 formed by pinching respective localised areas on the rod 10. A respective frusto-conical expansion element 36, slidable on the rod 10, projects by its narrow end into the slotted end of the sleeve 28 and is abutted by a nut 38 having, on its face averted from the element 36, diametrically-opposed lugs or tongues 40 (Fig. 1) whereby the nut 38 can be rotated by means of a complementary tubular tool 39.

The manner of operation and use of the wall tie will readily be understood from the foregoing description. Where two skins 50, 52 of a cavity wall are to be tied together (e.g. in the event of disintegration or rotting away of a pre-existent wall tie, not shown) using the tie, firstly a bore 54 is bored into the skins of the wall, this extending fully through outer skin 50 and only part way into the inner skin 52. The assembled tie is then inserted into the bore 54 to a position approximating to that shown in Fig. 1, in which the first anchoring means 14 is located wholly within the inner skin 52 and the second achoring means 16 is located wholly within the outer skin 50.

A suitable tool (not shown) of tubular form with an internally-threaded end is now engaged with end portion 46 and the rod 10 is rotated, whilst the sleeve 18 and the nut 26 are retained against rotation by frictional engagement with the wall of the bore 54 in the skin 52. As a result the nut 26 is drawn into the sleeve 18, expanding the latter and causing it to become firmly and reliably anchored in the skin 52, as shown in Fig. 2. When the sleeve 18 has been sufficiently expanded, the torque applied to the end portion 46 will increase, and dependent upon the dimensions chosen for a reduced diameter portion or neck (not shown) on the rod having regard to the strength of the material from which the rod 10 is made, in due time the neck will break off so that the part of the end portion 46 onto which the tool is screwed separates from the rest of the tie. This ensures that the first anchoring device 14 will have been sufficiently expanded to assure proper anchorage in the wall skin 52, but not too great an expansion which might, for example, result in destruction or crumbling of the material of the skin 52.

The wall tie is, then, anchored in the outer wall skin 50 by application of the tubular tool 39 to the nut 38 to rotate the latter and thereby expand the sleeve 28 by forcing the frusto-conical expansion element 36 therein. The lugs or projections 40 are effective to ensure that the element 16 is not over-expanded. As the expansion element 36 is forced into the sleeve 30 to expand the latter into tight frictional engagement with the wall of the borehole 54 in the outer wall skin 50, the torque applied progressively increases until such time as such torque overcomes the rigidity of the projections or lugs 40 and breaks them off so that there is no longer a positive engagement between the tool 39 and the nut 38 or alternatively, as shown in Fig. 2, shears such projections or lugs 40 so that the nut 38 can no longer be turned.

It will thus be appreciated that by the very simple expedient of providing the projections or lugs 40 on the nut 38 to which the tool 39 is applied, one obtains the advantage that the user of the wall tie is prevented from over-tightening the second anchoring device 16.

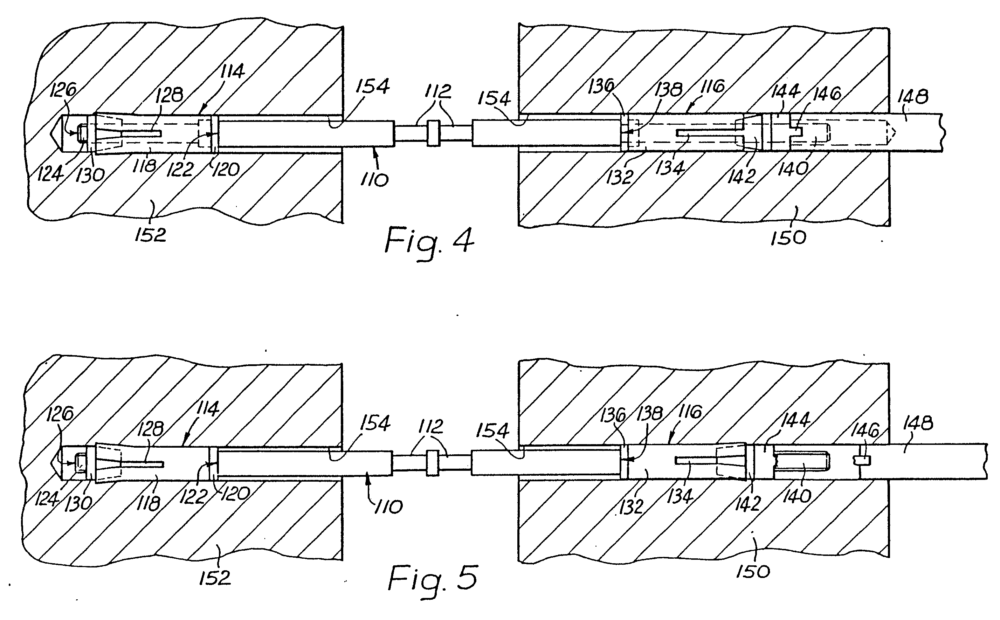

In the embodiment of wall tie shown in Figs. 1 and 2 the first and the second anchoring means 14 and 16 are both shown as being mechanically-expansible arrangements, but, as previously mentioned, the first anchoring means 14 may be of any suitable form. Thus, for example, as shown in Fig. 3, in which similar reference numerals have been allocated to parts which are similar to those already described, the first anchoring means may consists simply of formations in the form of pinches 60 and the rod 10 which can then be firmly cemented or anchored within the skin 50 by means of a resinous or other suitable adhesive or cement 62.

The third embodiment of the wall tie of the invention, illustrated in Figs. 4 and 5 comprises an elongate relatively-thick stainless steel rod 110 which approximately midway along its length has a pair of drip grooves 112 and which is externally smooth over the majority of this length. At or adjacent one end of the rod 110 is first anchoring means, as indicated generally by the reference numeral 114, and adjacent the other end of the rod 110 is second anchoring means indicated generally by the reference numeral 116.

As with the embodiments of Figs. 1 and 2 and of Fig. 3, the first anchoring means 114 may be of any suitable form; in the illustrated case such anchoring means 114 is of a mechanically-expansible type and comprises a tubular metal sleeve 118 the inner end of which abuts against a cup washer 120 which in turn abuts against a shoulder 122 formed integrally with the rod 110 at the root of an externally-threaded reduced-diameter portion 124 of the rod 110 at an appropriate disposition away from extremity 126 of the rod 110. Slots 128 are formed in the sleeve 118 and extend axially thereof from the end remote from the washer 120 and over about half of the length of the sleeve 118. A mechanical expansion element, in the form of a frusto-conical nut 130, is screwed onto the rod 110 so as to project by its narrow end into the sleeve 118. It will thus be appreciated that upon rotation of the rod 110, whilst the sleeve 118 and the nut 130 are retained against rotation, the nut 130 will be drawn into the sleeve 118 to expand the latter.

The second anchoring means 116 is also (and essentially) of a mechanically-expansible nature. Said means is somewhat similar to the first anchoring means 114, but is reversed in its arrangement, comprising a sleeve 132, with slots 134, abutting by its non-slotted end against a cup washer 136 which in turn abuts against a shoulder 138 at the root of a respective externally-threaded reduced diameter portion 140 of the rod 110. A respective frusto-conical expansion element 142, slidable on the rod 110, projects by its narrow end into the slotted end of the sleeve 132 and is abutted by a nut 144 having, on its face averted from the element 142, diametrically-opposed lugs or tongues 146 (Fig. 4) whereby the nut 144 can be rotated by means of a complementary tubular tool 148.

The manner of operation and use of the wall tie is substantially identical to that of Figs. 1 and 2. Where two skins 150, 152 of a cavity wall are to be tied together (e.g. in the event of disintegration or rotting away of a pre-existent wall tie, not shown) using the tie, firstly a bore 154 is bored into the skins of the wall, this extending fully through outer skin 150 and only part way into the inner skin 152. The assembled tie is then inserted into the bore 154 to a position approximating to that shown in Fig. 3, in which the first anchoring means 114 is located wholly within the inner skin 152 and the second anchoring means 116 is located wholly within the outer skin 150.

A suitable tool (not shown) to tubular form with an internally-threaded end is now engaged with end portion 140 and the rod 110 is rotated, whilst the sleeve 118 and the nut 130 are retained against rotation by frictional engagement with the wall of the bore 154 in the skin 152. As a result the nut 130 is drawn into the sleeve 118, expanding the latter and causing it to become firmly and reliabley anchored in the skin 152, as shown in Fig. 5. The arrangement may be such that when the sleeve 118 has been sufficiently expanded, the torque applied to the end portion 140 will increase, and dependent upon the dimensions chosen for a reduced diameter portion or neck (not shown) on the rod 110 having regard to the strength of the material from which the rod 110 is made, in due time the neck will break off so that the part of the end portion 140 onto which the tool is screwed separates from the rest of the tie. This arrangement ensures that the anchoring device 114 will have been sufficiently expanded to assure proper anchorage in the wall skin 152, but not too great an expansion which might, for example, result in destruction or crumbling of the material of the skin 152.

The wall tie is, then, anchored in the outer wall skin 150 by application of the tubular tool 148 to the nut 144 to rotate the latter and thereby expand the sleeve 132 by forcing the frusto-conical expansion element 142 therein. The lugs or projections 146 are effective to ensure that the element 116 is not over-expanded. As the expansion element 142 is forced into the sleeve 132 to expand the latter into tight frictional engagement with the wall of the borehole 154 in the outer wall skin 150, the torque applied progressively increases until such time as such torque overcomes the rigidity of the projections or lugs 146 and breaks them off so that there is no longer a positive engagement between the tool 148 and the nut 144 or alternatively, as shown in Fig. 4, shears such projections or lugs 146 so that the nut 144 can no longer be turned.

It will thus be appreciated that by the very simple expedient of providing the projections or lugs 146 on the nut 144 to which the tool 148 is applied, one obtains the advantage that the user of the wall tie is prevented from over-tightening the second anchoring device 116.

The invention is not confined to the precise details of the foregoing examples and variations may be made thereto. Thus, whilst in the arrangement of Figs. 4 and 5 of the drawings the first and the second anchoring means 114 and 116 are both shown as being mechanically-expansible arrangements, the first anchoring means 114 may be of any suitable form. Thus, for example, the first anchoring means 114 may consist simply of formations in the form of pinches or grooves on the rod 110 which can be firmly cemented or anchored within the skin 152 by means of a resinous or other suitable adhesive or cement as has been illustrated, for example, in the case of the embodiment of Fig. 3. Other variations are possible.

## Claims

1. A wall tie of the kind comprising a rod (10, 110) having first anchoring means (14, 114), at or adjacent to one end thereof, for anchoring in one skin (52, 152) of a cavity wall, and second anchoring means (16, 116), of a mechanically-expansible nature, adjacent to its other end for anchoring in the other skin (50, 150) of the wall, the arrangement being such that expansion of the second anchoring means (16, 116) is effected by rotation of a nut (38, 144) threaded on the rod (10, 110), the nut (38, 144) being provided with lugs or projections (40, 146) engageable by a tool (39, 148) for rotation of said nut (38, 144), characterised in that the lugs or projections (40, 146) are adapted to break off upon reaching a predetermined torque.

2. A wall tie as claimed in claim 1 wherein the nut (38, 144) is a circular nut having a pair of diametrically-opposed lugs or projections (40, 146) for engagement by the tool (39, 148).

3. A wall tie as claimed in claim 1 or 2 wherein the second anchoring means (16, 116) comprises a tubular sleeve (28, 132) adapted to be expanded in a bore (54) in the respective skin (50, 150) of the cavity wall.

4. A wall tie as claimed in claim 3 wherein the tubular sleeve (28, 132) is slotted along part of its length and rotation of the nut (38, 144) serves to force a frusto-conical expansion element (36, 142) into the slotted end of the sleeve (28, 132).

5. A wall tie as claimed in claim 3 or 4 wherein the sleeve (28, 132) abuts by its non-slotted end against stop means (34, 138) formed integrally with the rod (10, 110).

6. A wall tie as claimed in claim 5 wherein the stop means (34, 138) comprises pinched localised areas of the rod (10, 110).

7. A wall tie as claimed in claim 5 wherein the stop means (34, 138) comprises a shoulder present at the root of a reduced-diameter externally-threaded end portion of the rod (10, 110).

8. A wall tie as claimed in any preceding claim wherein the first anchoring means (14, 114) is mechanically-expansible.

9. A wall tie as claimed in claim 8 wherein the first anchoring means (14, 114) comprises a respective frusto-conical nut (26, 130) which is drawn into a respective expansion sleeve (18, 128) by rotation of the rod (10, 110).

10. A wall tie as claimed in any of claims 1 to 7 wherein the first anchoring means (14, 114) is adapted to be adhesively bonded in the one skin of the wall.

**Patentansprüche**

1. Anker zur Befestigung an Wänden mit Hohlraum, mit Verankerungsmitteln (14, 114) an oder angrenzend an deren einen Ende zur Verankerung in einer Schale (52, 152) der Wand aufweist, und zweiten, mechanisch weitbaren Verankerungsmitteln (16, 116), angrenzend am anderen Ende der Stange (10, 110), zur Verankerung in der anderen Schale (50, 150) der Wand, wobei das Weiten der zweiten Verankerungsmittel (16, 116) durch Drehen einer auf die Stange (10, 110) aufgeschraubten Mutter (38, 144) erfolgt und die Mutter (38, 144) von einem Werkzeug (39, 148) ergreifbare Lappen oder Vorsprünge (40, 146) zum Drehen der Mutter (38, 144) aufweist, dadurch gekennzeichnet, dass die Lappen oder Vorsprünge (40, 146) so ausgebildet sind, dass sie nach Erreichen eines vorbestimmten Drehmomentes abbrechen.

2. Anker nach Anspruch 1, dadurch gekennzeichnet, dass die Mutter (38, 144) als Rundmutter mit einem Paar einander diametral gegenüberliegender Lappen oder Vorsprünge (40, 146) für das Angreifen des Werkzeuges (39, 148) ausgebildet ist.

3. Anker nach Anspruch 1 oder 2, dadurch gekennzeichnet, dass das zweite Verankerungsmittel (16, 116) eine rohrförmige Hülse (28, 132) umfasst, welche zum Aufweiten in einer Bohrung (54) in der entsprechenden Schale (50, 150) der Wand beschaffen ist.

4. Ein Anker nach Anspruch 3, dadurch gekennzeichnet, dass die Hülse (28, 132) auf einem Teil ihrer Länge geschlitzt ist, und die Drehung der Mutter (38, 144) dazu dient, ein kegelstumpfförmiges Spreizelement (36, 142) in das geschlitzte Ende der Hülse (28, 132) einzutreiben.

5. Anker nach Anspruch 3 oder 4, dadurch gekennzeichnet, dass die Hülse (28, 132) mit ihrem nicht geschlitzten Ende gegen ein mit der Stange (10, 110) aus einem Stück geformtes Anschlagmittel (34, 138) anstösst.

6. Anker nach Anspruch 5, dadurch gekennzeichnet, dass das Anschlagmittel (34, 138) örtlich eingeschnürte Zonen der Stange (10, 110) umfasst.

7. Anker nach Anspruch 5, dadurch gekennzeichnet, dass das Anschlagmittel (34, 138) eine Schulter am Grund eines Endbereiches der Stange (10, 110) mit reduziertem Durchmesser und Aussengewinde aufweist.

8. Anker nach einem der angehenden Ansprüche, dadurch gekennzeichnet, dass das erste Verankerungsmittel (14, 114) mechanisch weitbar ist.

9. Anker nach Anspruch 8, dadurch gekennzeichnet, dass das erste Verankerungsmittel (14, 114) mit einer zugehörigen kegelstumpfförmigen Mutter (26, 130) ausgerüstet ist, welche durch die Drehung der Stange (10, 110) in eine entsprechende Spreizhülse (18, 128) hineingezogen wird.

10. Anker nach einem der Ansprüche 1 bis 7, dadurch gekennzeichnet, dass das erste Verankerungsmittel (14, 114) zum adhäsiven Zubinden in der einen Schale der Wand beschaffen ist.

**Revendications**

1. Un ensemble de raccordement de murs de type de ceux qui comprennent une tige (10, 110) ayant tout d'abord un point d'ancrage (14, 114) à son extrémité ou adjacent, pour ancrage dans un voile (52, 152) d'un mur à cavités, et un second point d'ancrage (16, 116), à expansion mécanique, adjacent en son autre extrémité pour s'ancrer dans l'autre voile (50, 150) du mur, la disposition étant telle que l'expansion du second point d'ancrage (16, 116) soit possible par rotation d'un boulon (38, 144) vissé sur la tige (10, 110), le dit boulon (38, 144) étant équipé de talons (40, 146) sur lesquels on peut agir avec un outil (39, 148) afin de faire tourner le dit boulon (38, 144) caractérisé en ce que les talons (40, 146) se cassent dès l'obtention d'un couple de serrage prédeterminé.

2. Un ensemble de raccordement de murs suivant revendication 1 caractérisé en ce que le boulon (38, 144) est un boulon cylindrique doté d'un couple de talons (40, 146), diamétralement opposés l'un à l'autre, pour l'actionnement de l'outil (39, 148).

3. Un ensemble de raccordement de murs suivant revendication 1 ou 2, dans lequel le second point d'ancrage (16, 116) comprend un manchon tubulaire (28, 132), adapté pour être expansé dans un orifice (54) de voile correspondant (50, 150) du mur.

4. Un ensemble de raccordement de murs suivant revendication 3, caractérisé en ce que le manchon tubulaire (28, 132) est fendu sur une partie de sa longueur et en ce que la rotation du boulon (38, 144) permet de chasser un élément d'expansion de forme tronconique (36, 142) dans le côté fendu de manchon (28, 132).

5. Un ensemble de raccordement de murs suivant revendication 3 ou 4, caractérisé en ce que le côté non fendu du manchon (28, 132) bute contre le point d'ancrage (34, 138) formé par lui et par la tige (10, 110).

6. Un ensemble de raccordement de murs suivant revendication 5, caractérisé en ce que le point d'ancrage (34, 138) comprend des surfaces particulières pincées de la tige (10, 110).

7. Un ensemble de raccordement de murs suivant revendication 5, caractérisé en ce que le point d'ancrage (34, 138) comprend un épaulement situé à la base d'une extrémité de la tige (10, 110) avec diamètre réduit et filetage extérieur.

8. Un ensemble de raccordement de murs suivant une des revendications précédentes, caractérisé en ce que le permier point d'ancrage (14, 114) peut être expansé mécaniquement.

9. Un ensemble de raccordement de murs suivant revendication 8, caractérisé en ce que le premier point d'ancrage (14, 114) comprend un boulon tronconique (26, 130) qui est introduit dans une douille d'expansion correspondante (18, 128) par rotation de la tige (10, 110).

10. Un ensemble de raccordement de murs suivant l'une des revendications 1 à 7, caractérisé en ce que le premier point d'ancrage (14, 114) est prévu pour être fixé par adhésivité dans l'un des voiles du mur.

1/2

Fig. 1

Fig. 2

Fig. 3

Fig. 4

Fig. 5